(19) Europäisches Patentamt
European Patent Office
Office européen des brevets

(11) EP 2 947 985 B1

(12) **EUROPEAN PATENT SPECIFICATION**

(45) Date of publication and mention of the grant of the patent:
**03.04.2019 Bulletin 2019/14**

(21) Application number: **14742825.4**

(22) Date of filing: **24.01.2014**

(51) Int Cl.:
***A01N 43/40*** *(2006.01)* ***A01P 13/00*** *(2006.01)*
***A01N 43/90*** *(2006.01)*

(86) International application number:
**PCT/US2014/012926**

(87) International publication number:
**WO 2014/116932 (31.07.2014 Gazette 2014/31)**

(54) **HERBICIDAL COMPOSITIONS COMPRISING 4-AMINO-3-CHLORO-6-(4-CHLORO-2-FLUORO-3-METHOXYPHENYL) PYRIDINE-2-CARBOXYLIC ACID**

HERBIZIDZUSAMMENSETZUNGEN MIT 4-AMINO-3-CHLOR-6-(4-CHLOR-2-FLUOR-3-METHOXYPHENYL-)PYRIDIN-2-CARBONSÄURE

COMPOSITIONS HERBICIDES COMPRENANT DE L'ACIDE 4-AMINO-3-CHLORO-6-(4-CHLORO-2-FLUORO-3-MÉTHOXYPHÉNYL)PYRIDINE-2-CARBOXYLI QUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2013 US 201361756906 P**

(43) Date of publication of application:
**02.12.2015 Bulletin 2015/49**

(73) Proprietor: **Dow AgroSciences LLC**
**Indianapolis, IN 46268 (US)**

(72) Inventors:
- **BANGEL, Bryston L.**
  **Camby, IN 46113 (US)**
- **SATCHIVI, Norbert M.**
  **Carmel, IN 46074 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**EP-A1- 2 524 602**
**WO-A2-2007/082098**
**WO-A2-2009/029518**
**US-A1- 2008 318 781**
**US-A1- 2010 137 137**
**US-A1- 2011 287 934**
**US-A1- 2012 115 727**
**US-A1- 2012 190 551**
**US-A1- 2013 023 413**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 947 985 B1

## Description

### Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use. However, there remains a need for compositions and methods that are effective in controlling undesirable vegetation. WO 2009/029518 describes synergistic mixtures of halauxifen with herbicides similar to diclosulam and chloransulam-methyl (e.g. florasulam).= WO 2009/029518 further mentions diclosulam or chloransulam-methyl as possible further ingredients.

### Summary

Provided herein are herbicidal compositions comprising a herbicidally effective amount of (a) a compound of the formula (I)

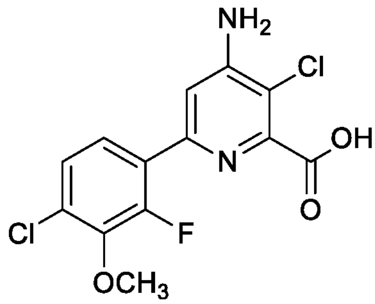

(I)

or an agriculturally acceptable salt or ester of thereof and (b) cloransulam-methyl or diclosulam or an agriculturally acceptable salt thereof, wherein the combination of (a) and (b) exhibits synergism. The compositions may also contain an agriculturally acceptable adjuvant or carrier.

Also provided are methods of controlling undesirable vegetation comprising applying (a) a compound of formula (I) or an agriculturally acceptable ester or salt thereof and (b) cloransulam-methyl or diclosulam or an agriculturally acceptable salt thereof, wherein the combination of (a) and (b) exhibits synergism.

### Detailed Description

DEFINITIONS

As used herein, the compound of formula (I) has the following structure:

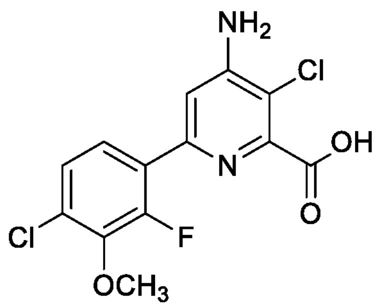

(I)

The compound of formula (I) can be identified by the name 4-amino-3-chloro-6-(4-chloro-2-fluoro-3-methoxyphenyl)pyridine-2-carboxylic acid and has been described in U.S. Patent 7,314,849 (B2). Exemplary uses of the compound of the formula (I) include controlling undesirable vegetation, including e.g., grass, broadleaf and sedge weeds,

in multiple non-crop and cropping situations.

Cloransulam-methyl or diclosulam are both triazolopyrimidine sulfonamides. As used herein, triazolopyrimidine sulfonamides are a chemical class of herbicides having a triazolopyrimidine sulfonamide core structure. Without being limited to any theory, their mode-of-action is believed to involve the inhibition of acetolactate synthase (ALS), an enzyme common to plants and microorganisms but not found in animals. Exemplary herbicidal uses of triazolopyrimidine sulfonamides include, but are not limited to, use for control of nuisance sedge, broadleaf and grass weeds.

As used herein, cloransulam-methyl is methyl 3-chloro-2-[[(5-ethoxy-7-fluoro[1,2,4]triazolo[1,5-c]pyrimidin-2-yl)sulfonyl]amino]benzoate. Its herbicidal activity is exemplified in Tomlin, C. D. S., Ed. The Pesticide Manual: A World Compendium, 15th ed.; BCPC: Alton, 2009 (hereafter "The Pesticide Manual"). Exemplary uses of cloransulam-methyl include its use as a herbicide for post-emergence control of broadleaf weeds in soybeans and other broadleaf crops.

As used herein, diclosulam is *N*-(2,6-dichlorophenyl)-5-ethoxy-7-fluoro[1,2,4]triazolo[1,5-*c*]pyrimidine-2-sulfonamide. Its herbicidal activity is exemplified in *The Pesticide Manual.* Exemplary uses of diclosulam include its use as a herbicide for broadleaf weed control in peanuts and soybeans.

As used herein, control of or controlling undesirable vegetation means killing or preventing the vegetation, or causing some other adverse modifying effect to the vegetation e.g., deviations from natural growth or development, regulation, desiccation, retardation, and the like.

As used herein, herbicide and herbicidal active ingredient mean a compound that controls undesirable vegetation when applied in an appropriate amount.

As used herein, a herbicidally effective or vegetation controlling amount is an amount of herbicidal active ingredient the application of which controls the relevant undesirable vegetation.

As used herein, applying a herbicide or herbicidal composition means delivering it directly to the targeted vegetation or to the locus thereof or to the area where control of undesired vegetation is desired. Methods of application include, but are not limited to pre-emergence, post-emergence, foliar, soil, and in-water applications. Described herein are methods of controlling undesirable vegetation by applying certain herbicide combinations or compositions.

As used herein, plants and vegetation include, but are not limited to, dormant seeds, germinant seeds, emerging seedlings, plants emerging from vegetative propagules, immature vegetation, and established vegetation.

As used herein, agriculturally acceptable salts and esters refer to salts and esters that exhibit herbicidal activity, or that are or can be converted in plants, water, or soil to the referenced herbicide. Exemplary agriculturally acceptable esters are those that are or can by hydrolyzed, oxidized, metabolized, or otherwise converted, e.g., in plants, water, or soil, to the corresponding carboxylic acid which, depending on the pH, may be in the dissociated or undissociated form.

Exemplary salts include those derived from alkali or alkaline earth metals and those derived from ammonia and amines. Exemplary cations include sodium, potassium, magnesium, and ammonium cations of the formula:

$$R^1R^2R^3R^4N^+$$

wherein $R^1$, $R^2$, $R^3$ and $R^4$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R^1$, $R^2$, $R^3$ and $R^4$ are sterically compatible. Additionally, any two of $R^1$, $R^2$, $R^3$ and $R^4$ together may represent an aliphatic difunctional moiety containing one to twelve carbon atoms and up to two oxygen or sulfur atoms. Salts can be prepared by treatment with a metal hydroxide, such as sodium hydroxide, with an amine, such as ammonia, trimethylamine, diethanolamine, 2-methylthiopropylamine, bisallylamine, 2-butoxyethylamine, morpholine, cyclododecylamine, or benzylamine or with a tetraalkylammonium hydroxide, such as tetramethylammonium hydroxide or choline hydroxide.

Exemplary esters include those derived from $C_1$-$C_{12}$ alkyl, $C_3$-$C_{12}$ alkenyl, $C_3$-$C_{12}$ alkynyl or $C_7$-$C_{10}$ aryl-substituted alkyl alcohols, such as methyl alcohol, isopropyl alcohol, 1-butanol, 2-ethylhexanol, butoxyethanol, methoxypropanol, allyl alcohol, propargyl alcohol, cyclohexanol or unsubstituted or substituted benzyl alcohols. Benzyl alcohols may be substituted with from 1-3 substituents independently selected from halogen, $C_1$-$C_4$ alkyl or $C_1$-$C_4$ alkoxy. Esters can be prepared by coupling of the acids with the alcohol using any number of suitable activating agents such as those used for peptide couplings such as dicyclohexylcarbodiimide (DCC) or carbonyl diimidazole (CDI); by reacting the acids with alkylating agents such as alkylhalides or alkylsulfonates in the presence of a base such as triethylamine or lithium carbonate; by reacting the corresponding acid chloride of an acid with an appropriate alcohol; by reacting the corresponding acid with an appropriate alcohol in the presence of an acid catalyst or by transesterification.

As used herein, weight ratios of mixtures are calculated using the acid equivalent weight(s) of any compounds in the mixture that are salts or esters.

COMPOSITIONS AND METHODS

Provided herein are herbicidal compositions comprising a herbicidally effective amount of (a) a compound of the formula (I)

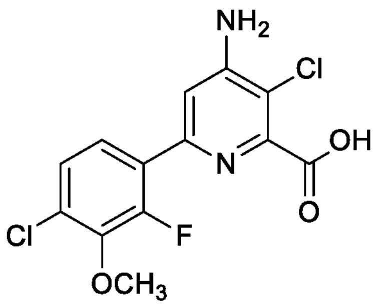

(I)

or an agriculturally acceptable salt or ester of thereof and (b) cloransulam-methyl or diclosulam, wherein the combination of (a) and (b) exhibits synergism.

Also provided herein are methods of controlling undesirable vegetation comprising applying a herbicidally effective amount of the compound of formula (I) or agriculturally acceptable salt or ester thereof and (b) cloransulam-methyl or diclosulam, wherein the combination of (a) and (b) exhibits synergism. In certain embodiments, the methods employ the compositions described herein.

The combination of compound (I) or agriculturally acceptable salt or ester thereof and cloransulam-methyl or diclosulam exhibits synergism, *i.e.*, the herbicidal active ingredients are more effective in combination than when applied individually. Synergism has been defined as "an interaction of two or more factors such that the effect when combined is greater than the predicted effect based on the response of each factor applied separately." Senseman, S., Ed. Herbicide Handbook. 9th ed. Lawrence: Weed Science Society of America, 2007. In certain embodiments, the compositions exhibit synergy as determined by Colby's equation (Colby, S.R. Calculation of the synergistic and antagonistic response of herbicide combinations. Weeds 1967, 15, 20-22.

In certain embodiments of the compositions and methods described herein, the compound of formula (I), *i.e.,* the carboxylic acid, is employed. In certain embodiments, a carboxylate salt of the compound of formula (I) is employed. In certain embodiments, an aralkyl or alkyl ester is employed. In certain embodiments, a benzyl, substituted benzyl, or $C_1$-$C_4$ alkyl, *e.g.*, n-butyl ester is employed. In certain embodiments, the methyl ester, benzyl ester, or potassium salt is employed.

In some embodiments, the compound of formula (I) or salt or ester thereof and cloransulam-methyl or diclosulam are formulated in one composition, tank-mixed, applied simultaneously, or applied sequentially.

Herbicidal activity (control of undesirable vegetation) is exhibited by the herbicidal compositions when they are applied directly to the plant or to the locus of the plant at any stage of growth, or to the area where control of vegetation is desired. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted to promote non-selective or selective herbicidal action. In some embodiments, the compositions described herein are applied as a post-emergence application, pre-emergence application, or in-water application to flooded paddy rice or water bodies (e.g., ponds, lakes and streams), to relatively immature undesirable vegetation to achieve the maximum control of weeds.

In some embodiments, the compositions and methods provided herein are utilized to control weeds in crops, including but not limited to winter/spring oilseed rape, winter/spring canola, vegetables, *Brassica* spp, ornamentals, rice, wheat, triticale, barley, oats, rye, sorghum, corn/maize, sunflower, row crops, pastures, grasslands, rangelands, fallowland, sugarcane, turf, tree and vine orchards, aquatics, and industrial vegetation management (IVM) and rights-of-way.

The compositions and methods provided herein are utilized to control undesirable vegetation. Undesirable vegetation includes, but is not limited to, undesirable vegetation that occurs in oilseed rape, canola, vegetables, *Brassica* spp, ornamentals, rice, wheat, triticale, barley, oats, rye, sorghum, corn/maize, sunflower, row crops, pastures, grasslands, rangelands, fallowland, sugarcane, turf, tree and vine orchards, IVM and rights-of-way.

In some embodiments, the methods provided herein are utilized to control undesirable vegetation in oilseed rape, canola, drilled crops and cereal crops. In certain embodiments, the undesirable vegetation is *Alopecurus myosuroides* Huds. (blackgrass, ALOMY), *Apera spica-venti* (L.) Beauv. (windgrass, APESV), *Avena fatua* L. (wild oat, AVEFA), *Bromus tectorum* L. (downy brome, BROTE), *Lolium multiflorum* Lam. (Italian ryegrass, LOLMU), *Lolium rigidum* (rigid ryegrass, LOLRI), *Lolium multiflorum subsp. Gaudini* (annual ryegrass, LOLMG), *Phalaris minor* Retz. (littleseed canarygrass, PHAMI), *Poa annua* L. (annual bluegrass, POAAN), *Setaria pumila* (Poir.) Roemer & J.A. Schultes (yellow foxtail, SETLU), *Setaria viridis* (L.) Beauv. (green foxtail, SETVI), *Cirsium arvense* (L.) Scop. (Canada thistle, CIRAR*), Galium aparine* L. (catchweed bedstraw, GALAP), *Kochia scoparia* (L.) Schrad. (kochia, KCHSC), *Lamium purpureum*

L. (purple deadnettle , LAMPU), *Matricaria recutita* L. (wild chamomile, MATCH), *Matricaria matricarioides* (Less.) Porter (pineappleweed, MATMT), *Papaver rhoeas* L. (common poppy, PAPRH), *Polygonum convolvulus* L. (wild buckwheat, POLCO), *Salsola tragus* L. (Russian thistle, SASKR), *Stellaria media* (L.) Vill. (common chickweed, STEME), *Veronica persica* Poir. (Persian speedwell, VERPE), *Viola arvensis* Murr. (field violet, VIOAR), or *Viola tricolor* L. (wild violet, VIOTR).

In some embodiments, the compositions and methods provided herein are utilized to control undesirable vegetation in rice. In certain embodiments, the undesirable vegetation is *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) LINK (junglerice, ECHCO), *Echinochloa oryzoides* (Ard.) Fritsch (early watergrass, ECHOR), *Echinochloa oryzicola* (Vasinger) Vasinger (late watergrass, ECHPH), *Ischaemum rugosum* Salisb. (saramollagrass, ISCRU), *Leptochloa chinensis* (L.) Nees (Chinese sprangletop, LEFCH), *Leptochloa fascicularis* (Lam.) Gray (bearded sprangletop, LEFFA), *Leptochloa panicoides* (Presl.) Hitchc. (Amazon sprangletop, LEFPA), *Panicum dichotomiflorum* (L.) Michx. (Fall panicum, PANDI), *Paspalum dilatatum* Poir. (dallisgrass, PASDI), *Cyperus difformis* L. (smallflower flatsedge, CYPDI), *Cyperus esculentus* L. (yellow nutsedge, CYPES), *Cyperus iria* L. (rice flatsedge, CYPIR), *Cyperus rotundus* L. (purple nutsedge, CYPRO), *Eleocharis* species (ELOSS), *Fimbristylis miliacea* (L.) Vahl (globe fringerush, FIMMI), *Schoenoplectus juncoides* Roxb. (Japanese bulrush, SPCJU), *Schoenoplectus maritimus* L. (sea clubrush, SCPMA), *Schoenoplectus mucronatus* L. (ricefield bulrush, SCPMU), *Aeschynomene* species, (jointvetch, AESSS), *Alternanthera philoxeroides* (Mart.) Griseb. (alligatorweed, ALRPH), *Alisma plantago-aquatica* L. (common waterplantain, ALSPA), *Amaranthus* species, (pigweeds and amaranths, AMASS), *Ammannia coccinea* Rottb. (redstem, AMMCO), *Eclipta alba* (L.) Hassk. (American false daisy, ECLAL), *Heteranthera limosa* (SW.) Willd./Vahl (ducksalad, HETLI), *Heteranthera reniformis* R. & P. (roundleaf mudplantain, HETRE), *Ipomoea hederacea* (L.) Jacq. (ivyleaf morningglory, IPOHE), *Lindernia dubia* (L.) Pennell (low false pimpernel, LIDDU), *Monochoria korsakowii* Regel & Maack (monochoria, MOOKA), *Monochoria vaginalis* (Burm. F.) C. Presl ex Kuhth, (monochoria, MOOVA), *Murdannia nudiflora* (L.) Brenan (doveweed, MUDNU), *Polygonum pensylvanicum* L., (Pennsylvania smartweed, POLPY), *Polygonum persicaria* L. (ladysthumb, POLPE), *Polygonum hydropiperoides* Michx. (mild smartweed, POLHP), *Rotala indica* (Willd.) Koehne (Indian toothcup, ROTIN), *Sagittaria* species, (arrowhead, SAGSS), *Sesbania exaltata* (Raf.) Cory/Rydb. Ex Hill (hemp sesbania, SEBEX), or *Sphenoclea zeylanica* Gaertn. (gooseweed, SPDZE).

In some embodiments, the compositions and methods provided herein are utilized to control undesirable vegetation in range and pasture. In certain embodiments, the undesirable vegetation is *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Euphorbia esula* L. (leafy spurge, EPHES), *Lactuca serriola* L./Torn. (prickly lettuce, LACSE), *Plantago lanceolata* L. (buckhorn plantain, PLALA), *Rumex obtusifolius* L. (broadleaf dock, RUMOB), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (dandelion, TAROF), *Trifolium repens* L. (white clover, TRFRE), or *Urtica dioica* L. (common nettle, URTDI).

In some embodiments, the compostions and methods provided herein are utilized to control undesirable vegetation found in row crops and vegetable crops. In certain embodiments, the undesirable vegetation is *Alopecurus myosuroides* Huds. (blackgrass, ALOMY), *Avena fatua* L. (wild oat, AVEFA), *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) Link (junglerice, ECHCO), *Lolium multiflorum* Lam. (Italian ryegrass, LOLMU), *Panicum dichotomiflorum* Michx. (Fall panicum, PANDI), *Panicum miliaceum* L. (wild-proso millet, PANMI), *Setaria faberi* Herrm. (giant foxtail, SETFA), *Setaria viridis* (L.) Beauv. (green foxtail, SETVI), *Sorghum halepense* (L.) Pers. (Johnsongrass, SORHA), *Sorghum bicolor* (L.) Moench ssp. *Arundinaceum* (shattercane, SORVU), *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (Western ragweed, AMBPS), *Ambrosia trifida* L. (giant ragweed, AMBTR), *Asclepias syriaca* L. (common milkweed, ASCSY), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Erigeron bonariensis* L. (hairy fleabane, ERIBO), *Erigeron canadensis* L. (Canadian fleabane, ERICA), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Sida spinosa* L. (prickly sida, SIDSP), *Sinapis arvensis* L. (wild mustard, SINAR), *Solanum ptychanthum* Dunal (eastern black nightshade, SOLPT), or *Xanthium strumarium* L. (common cocklebur, XANST).

In some embodiments, the compositions and methods provided herein are utilized to control undesirable vegetation consisting of grass, broadleaf and sedge weeds.

In some embodiments, the combination of compound (I) or agriculturally acceptable ester or salt thereof and cloransulam-methyl or diclosulam or agriculturally acceptable salt or ester thereof are used to control *Amaranthus retroflexus* (redroot pigweed, AMARE), *Chenopodium album* (common lambsquarters, CHEAL), *Centaurea cyanus* (cornflower, CENCY), *Descurainia sophia* (flixweed, DESSO), *Conyza canadensis* (horseweed / marestail, ERICA), *Conyza bonariensis* (fleabane, ERIBO), *Erodium cicutarium* (storksbill / redstem filaree, EROCI), *Fumaria officinalis* (common fumitory, FUMOF), *Galeopsis tetrahit* (common hempnettle, GAETE), *Galium aparine* (edstraw, catchweed / cleavers, GALAP), *Geranium dissectum* (cutleaf geranium, GERDI), *Geranium pusillum* (smallflower geranium, GERPU), *Glycine max* (volunteer soybean, GLXMA), *Lamium amplexicaule* (henbit, LAMAM), *Lamium purpuruem* (purple deadnettle, LAMPU), *Papaver rhoeas* (common poppy, PAPRH), *Stellaria media* (common chickweed, STEME), *Veronica persica* (Persian speedwell, VERPE), *Linum usitatissimum* (volunteer flax, LIUUT), *Geranium carolinianum* (Carolina geranium, GERCA), or *Vicia villosa* (hairy vetch, VICVI).

In certain embodiments of the compositions and methods described herein, the compound of formula (I) or salt or ester thereof is used in combination with cloransulam-methyl. With regard to the compositions, in some embodiments, the weight ratio of the compound of formula (I) or salt or ester thereof to cloransulam-methyl is within the range from about 1:35 to about 5:1. In certain embodiments, the weight ratio of the compound of formula (I) or salt or ester thereof to cloransulam-methyl is within the range from about 1:20 to about 1.25:1. In certain embodiments, the compositions provided herein comprise the methyl ester of the compound of formula (I) and cloransulam-methyl. In one embodiment, the composition comprises the methyl ester of the compound of formula (I) and cloransulam-methyl, wherein the weight ratio of the compound of formula (I) to cloransulam-methyl is from about 1:35 to about 5:1. In one embodiment, the composition comprises the methyl ester of the compound of formula (I) and cloransulam-methyl, wherein the weight ratio of the methyl ester of the compound of formula (I) to cloransulam-methyl is from about 1:20 to about 1.25:1. In one embodiment, the composition comprises the methyl ester of the compound of formula (I) and cloransulam-methyl, wherein the weight ratio of the methyl ester of the compound of formula (I) to cloransulam-methyl is from about 1:14 to about 4:3.5.

With respect to the methods, in certain embodiments, the methods comprise contacting the undesirable vegetation or locus thereof or applying to the soil or water to prevent the emergence or growth of vegetation a composition described herein. In some embodiments, the composition is applied at an application rate from about 3 grams active ingredient per hectare (g ai/ha) to about 45 g ai/ha based on the total amount of active ingredients in the composition. In certain embodiments, the composition is applied at an application rate from about 6 g ai/ha to about 25 g ai/ha based on the total amount of active ingredients in the composition. In some embodiments, the methods comprise contacting the undesirable vegetation or locus thereof or applying to the soil or water to prevent the emergence or growth of vegetation with a compound of formula (I) or salt or ester thereof and cloransulam-methyl, e.g., sequentially or simultaneously. In some embodiments, the cloransulam-methyl is applied at a rate from about 2 g ai/ha to about 35 g ai/ha and the compound of formula (I) or salt or ester thereof is applied at a rate from about 1 grams acid equivalent per hectare (g ae/ha) to about 10 g ae/ha. In some embodiments, the cloransulam-methyl is applied at a rate from about 4.375 g ai/ha to about 17.5 g ai/ha and the compound of formula (I) or salt or ester thereof is applied at a rate from about 1.25 g ae/ha to about 5 g ae/ha. In certain embodiments, the methods utilize the compound of formula (I), or its methyl ester and cloransulam-methyl. In one embodiment, the methods utilize the methyl ester of the compound of formula (I) and cloransulam-methyl, wherein the methyl ester of the compound of formula (I) is applied at a rate from about 1.25 g ae/ha to about 5 g ae/ha, and cloransulam-methyl is applied at a rate from about 4.375 g ai/ha to about 17.5 g ai/ha. In certain embodiments, the methods and compositions utilizing the compound of formula (I) or salt or ester thereof in combination with cloransulam-methyl are used to control VIOTR, STEME, SORVU, or IPOHE.

In certain embodiments of the compositions and methods described herein, the compound of formula (I) or salt or ester thereof is used in combination with diclosulam. With regard to the compositions, in some embodiments, the weight ratio of the compound of formula (I) or salt or ester thereof to diclosulam is within the range from about 1:35 to about 5:1. In certain embodiments, the weight ratio of the compound of formula (I) or salt or ester thereof to diclosulam is within the range from about 1:20 to about 1.25:1. In certain embodiments, the compositions provided herein comprise the methyl ester of the compound of formula (I) and diclosulam. In one embodiment, the composition comprises the methyl ester of the compound of formula (I) and diclosulam, wherein the weight ratio of the compound of formula (I) to diclosulam is from about 1:35 to about 5:1. In one embodiment, the composition comprises the methyl ester of the compound of formula (I) and diclosulam, wherein the weight ratio of the methyl ester of the compound of formula (I) to diclosulam is from about 1:20 to about 1.25:1. In one embodiment, the composition comprises the methyl ester of the compound of formula (I) and diclosulam, wherein the weight ratio of the methyl ester of the compound of formula (I) to diclosulam is from about 1:14 to about 4:3.5.

With respect to the methods, in certain embodiments, the methods comprise contacting the undesirable vegetation or locus thereof or applying to the soil or water to prevent the emergence or growth of vegetation a composition described herein. In some embodiments, the composition is applied at an application rate from about 3 grams active ingredient per hectare (g ai/ha) to about 45 g ai/ha based on the total amount of active ingredients in the composition. In certain embodiments, the composition is applied at an application rate from about 5.6 g ai/ha to about 22.5 g ai/ha

based on the total amount of active ingredients in the composition. In some embodiments, the methods comprise contacting the undesirable vegetation or locus thereof or applying to the soil or water to prevent the emergence or growth of vegetation with a compound of formula (I) or salt or ester thereof and diclosulam, e.g., sequentially or simultaneously. In some embodiments, the diclosulam is applied at a rate from about 2 g ai/ha to about 35 g ai/ha and the compound of formula (I) or salt or ester thereof is applied at a rate from about 1 grams acid equivalent per hectare (g ae/ha) to about 10 g ae/ha. In some embodiments, the diclosulam is applied at a rate from about 4.375 g ai/ha to about 17.5 g ai/ha and the compound of formula (I) or salt or ester thereof is applied at a rate from about 1.25 g ae/ha to about 5 g ae/ha. In certain embodiments, the methods utilize the compound of formula (I) or its methyl ester and diclosulam. In one embodiment, the methods utilize the methyl ester of the compound of formula (I) and diclosulam, wherein the methyl ester of the compound of formula (I) is applied at a rate from about 1.25 g ae/ha to about 5 g ae/ha, and diclosulam is applied at a rate from about 4.375 g ai/ha to about 17.5 g ai/ha. In certain embodiments, the methods and compositions utilizing the compound of formula (I) or salt or ester thereof in combination with diclosulam are used to control VIOTR, STEME, SORVU or IPOHE.

The components of the mixtures described herein can be applied either separately or as part of a multipart herbicidal system. In some embodiments of the methods described herein, the active ingredients are applied simultaneously, including, e.g., in the form of a composition. In some embodiments, the active ingredients are applied sequentially, e.g., within 5, 10, 15, or 30 minutes of each other; 1, 2, 3, 4, 5, 10, 12, 24, 48 hour(s) of each other; or 1 week of each other.

The mixtures described herein can be applied in conjunction with one or more other herbicides to control a wider variety of undesirable vegetation. When used in conjunction with other herbicides, the composition can be formulated with the other herbicide or herbicides, tank-mixed with the other herbicide or herbicides or applied sequentially with the other herbicide or herbicides. Some of the herbicides that can be employed in conjunction with the compositions and methods described herein include, but are not limited to: 4-CPA, 4-CPB, 4-CPP, 2,4-D, 2,4-D choline salt, 2,4-D esters and amines, 2,4-DB, 3,4-DA, 3,4-DB, 2,4-DEB, 2,4-DEP, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, benthiocarb, bentazon-sodium, benzadox, benzfendizone, benzipram, benzobicyclon, benzofenap, benzofluor, benzoylprop, benzthiazuron, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, chlorprocarb, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop-propargyl, clofop, clomazone, clomeprop, cloprop, cloproxydim, clopyralid, CMA, copper sulfate, CPMF, CPPC, credazine, cresol, cumyluron, cyanatryn, cyanazine, cycloate, cyclosulfamuron, cycloxydim, cycluron, cyhalofop-butyl, cyperquat, cyprazine, cyprazole, cypromid, daimuron, dalapon, dazomet, delachlor, desmedipham, desmetryn, diallate, dicamba, dichlobenil, dichloralurea, dichlormate, dichlorprop, dichlorprop-P, diclofopmethyl, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethbenzamide, ethametsulfuron, ethidimuron, ethiolate, ethobenzanid, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl + isoxadifen-ethyl, fenoxasulfone, fenteracol, fenthiaprop, fentrazamide, fenuron, ferrous sulfate, flamprop, flamprop-M, flazasulfuron, fluazifop, fluazifop-P-butyl, fluazolate, flucarbazone, flucetosulfuron, fluchloralin, flufenacet, flufenican, flufenpyr-ethyl, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glufosinate, glufosinate-ammonium, glufosinate-P-ammonium, glyphosate, halosafen, halosulfuron-methyl, haloxydine, haloxyfop-methyl, haloxyfop-P-methyl, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron,

methometon, methoprotryne, methyl bromide, methyl isothiocyanate, methyldymron, metobenzuron, metobromuron, metolachlor, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron, OCH, orbencarb, ortho-dichlorobenzene, orthosulfamuron, oryzalin, oxadiargyl, oxadiazon, oxapyrazon, oxasulfuron, oxaziclomefone, oxyfluorfen, paraflufen-ethyl, parafluron, paraquat, pebulate, pelargonic acid, pendimethalin, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, quinclorac, quinmerac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiocarbazil, tioclorim, topramezone, tralkoxydim, triafamone, tri-allate, triasulfuron, triaziflam, tribenuron, tribenuron-methyl, tricamba, triclopyr choline salt, triclopyr esters and salts, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, esters, optically active isomers and mixtures thereof.

In some embodiments the methods provided herein are used to control undesirable vegetation in crops that are tolerant to glyphosate, glufosinate, dicamba, phenoxy auxins, pyridyloxy auxins, aryloxyphenoxypropionates, acetyl CoA carboxylase (ACCase) inhibitors, imidazolinones, acetolactate synthase (ALS) inhibitors, 4-hydroxyphenyl-pyruvate dioxygenase (HPPD) inhibitors, protoporphyrinogen oxidase (PPO) inhibitors, triazines, or bromoxynil. Such herbicide tolerant crops may possesses multiple or stacked traits conferring tolerance to multiple herbicides or multiple modes-of-action.

In some embodiments the methods provided herein are used to control undesirable vegetation that is a herbicide resistant or tolerant weed. Such herbicide resistant or tolerant weed may have a biotype with resistance or tolerance to multiple herbicides, multiple chemical classes, or multiple herbicide modes-of-action. For example, the herbicide resistant or tolerant weed may have a biotype resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action, quinclorac, arylaminopropionic acids, difenzoquat, endothall, or organoarsenicals.

In some embodiments, the compositions described herein are employed in combination with one or more herbicide safeners, such as AD-67 (MON 4660), benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148, 1-[4-(*N*-(2-methoxybenzoyl)sulfamoyl)phenyl]-3-methylurea, *N*-(2-methoxybenzoyl)-4-[(methylaminocarbonyl)amino]benzenesulfonamide and *N*-phenyl-sulfonylbenzoic acid amides, to enhance their selectivity. In some embodiments, the safeners are employed in rice, cereal, corn, or maize settings. In some embodiments, the safener is cloquintocet or an ester or salt thereof. In certain embodiments, cloquintocet is utilized to antagonize harmful effects of the compositions on rice and cereals. In some embodiments, the safener is cloquintocet (mexyl).

In some embodiments, compositions provided herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or tank-mixed.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$)

ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N*,*N*-dimethyl alkylamides, dimethyl sulfoxide, liquid fertilizers and the like. In certain embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, *inter alia,* in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Surface-active agents include, but are not limited to salts of alkyl sulfates, such as diethanolammonium lauryl sulfate; alkylarylsulfonate salts, such as calcium dodecylbenzenesulfonate; alkylphenol-alkylene oxide addition products, such as nonylphenol-Cis ethoxylate; alcohol-alkylene oxide addition products, such as tridecyl alcohol-$C_{16}$ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

In some embodiments, the concentration of the active ingredients in the compositions described herein is from about 0.0005 to 98 percent by weight. In some embodiments, the concentration is from about 0.0006 to 90 percent by weight. In compositions designed to be employed as concentrates, the active ingredients, in certain embodiments, are present in a concentration from about 0.1 to 98 weight percent, and in certain embodiments about 0.5 to 90 weight percent. Such compositions are, in certain embodiments, diluted with an inert carrier, such as water, before application. The diluted compositions usually applied to weeds or the locus of weeds contain, in certain embodiments, about 0.0003 to 1.5 weight percent active ingredient and in certain embodiments contain about 0.0008 to 1.0 weight percent.

The present compositions can be applied to weeds or their locus by the use of conventional ground or aerial dusters, sprayers, and granule applicators, by addition to irrigation or paddy water, and by other conventional means known to those skilled in the art.

EXAMPLES

Evaluation of Postemergent Herbicidal Activity. Seeds or nutlets of the desired test plant species were planted in Sun Gro Metro-Mix® 360 planting mixture, which typically has a pH of 6.0 to 6.8 and an organic matter content of

about 30 percent, in plastic pots with a surface area of 64 square centimeters ($cm^2$). When required to ensure good germination and healthy plants, a fungicide treatment and/or other chemical or physical treatment was applied. The plants were grown for 7-21 days (d) in a greenhouse with an approximate 15 hour (h) photoperiod which was maintained at about 23-29 °C during the day and 22-28 °C during the night. Nutrients and water were added on a regular basis and supplemental lighting was provided with overhead metal halide 1000-Watt lamps as necessary. The plants were employed for testing when they reached the first or second true leaf stage.

A weighed amount, determined by the highest rate to be tested, of each test compound was placed in a 25 milliliter (mL) glass vial and was dissolved in 4 mL of a 97:3 volume per volume (v/v) mixture of acetone and dimethyl sulfoxide (DMSO) to obtain concentrated stock solutions. If the test compound did not dissolve readily, the mixture was warmed and/or sonicated. The concentrated stock solutions obtained were diluted with 20 mL of an aqueous mixture containing acetone, water, isopropyl alcohol, DMSO, Atplus 411F crop oil concentrate, and Triton® X-155 surfactant in a 48.5:39:10:1.5:1.0:0.02 v/v ratio to obtain spray solutions containing the highest application rates. Additional application rates were obtained by serial dilution of 12 mL of the high rate solution into a solution containing 2 mL of a 97:3 v/v mixture of acetone and DMSO and 10 mL of an aqueous mixture containing acetone, water, isopropyl alcohol, DMSO, Atplus 411F crop oil concentrate, and Triton X-155 surfactant in a 48.5:39:10:1.5:1.0:0.02 v/v ratio to obtain 1/2X, 1/4X, 1/8X and 1/16X rates of the high rate. Compound requirements are based upon a 12 mL application volume at a rate of 187 liters per hectare (L/ha). Formulated compounds were applied to the plant material with an overhead Mandel track sprayer equipped with 8002E nozzles calibrated to deliver 187 L/ha over an application area of 0.503 square meters ($m^2$) at a spray height of 18 inches (43 cm) above the average plant canopy height. Control plants were sprayed in the same manner with the solvent blank.

Treatments consisted of the methyl ester of 4-amino-3-chloro-6-(4-chloro-2-fluoro-3-methoxyphenyl)pyridine-2-carboxylic acid (Cmpd 1) as technical grade material and cloransulam-methyl (FirstRate®) and diclosulam (Strongarm®) alone and in combination. The form of compound of formula (I) was applied on an acid equivalent basis, and cloransulam-methyl and diclosulam were applied on an active ingredient basis.

The treated plants and control plants were placed in a greenhouse as described above and watered by subirrigation to prevent wash-off of the test compounds. After 14 d, the condition of the test plants as compared with that of the untreated plants was determined visually and scored on a scale of 0 to 100 percent where 0 corresponds to no injury and 100 corresponds to complete kill. Some of the compounds tested, application rates employed, plant species tested, and results are given in Tables 1 and 2.

Results in Tables 1 and 2 are greenhouse trial results for foliar applied compositions. The values reported are percent (%) control visually rated. Colby's equation was used to determine the herbicidal effects expected from the mixtures (Colby, S. R. Calculation of the synergistic and antagonistic response of herbicide combinations. Weeds 1967, 15, 20-22.). More specifically, the following equation was used to calculate the expected activity of mixtures containing two active ingredients, A and B:

$$\text{Expected} = A + B - (A \times B/100)$$

A = observed efficacy of active ingredient A at the same concentration as used in the mixture;

B = observed efficacy of active ingredient B at the same concentration as used in the mixture.

The compositions tested, application rates employed, plant species tested, and results are given in Tables 1 and 2.

The following abbreviations are used in Tables 1 and 2:

BRSNW *Brassica napus* (winter oilseed rape)
CHEAL *Chenopodium album* L. (common lambsquarters)
VIOTR *Viola tricolor* (L.) (wild pansy)
STEME *Stellaria media* (L.) Vill. (common chickweed)
SETFA *Setaria faberi* Herrm. (giant foxtail)
SORVU *Sorghum vulgare* (common sorghum)
AMARE *Amaranthus retroflexus* L. (redroot pigweed)
CYPES *Cyperus esculentus* L. (yellow nutsedge)
IPOHE *Ipomoea hederacea* (L.) Jacq. (ivyleaf morningglory)
g ae/ha = grams acid equivalent per hectare
g ai/ha = grams active ingredient per hectare
Obs = observed value of percent (%) control rated visually

Exp = expected value of percent (%) control as calculated by Colby's equation

Cmpd 1 = methyl 4-amino-3-chloro-6-(4-chloro-2-fluoro-3-methoxyphenyl)pyridine-2-carboxylate

**Table 1: Synergistic combination of Cmpd 1 and cloransulam-methyl.**

| Application Rate | | BRSNW | | CHEAL | | VIOTR | | STEME | | SETFA | | SORVU | | AMARE | | IPOHE | |
|---|---|---|---|---|---|---|---|---|---|---|---|---|---|---|---|---|---|
| Cmpd 1 (g ae/ha) | Cloransulam-methyl (g ai/ha) | Obs | Exp | Obs | Exp | Obs | Exp | Obs | Exp | Obs | Exp | Obs | Exp | Obs | Exp | Obs | Exp |
| 1.25 | 0 | 0 | - | 70 | - | 10 | - | 30 | - | 0 | - | 0 | - | 50 | - | 10 | - |
| 2.5 | 0 | 5 | - | 80 | - | 10 | - | 20 | - | 0 | - | 0 | - | 60 | - | 20 | - |
| 5 | 0 | 20 | - | 93 | - | 30 | - | 40 | - | 30 | - | 0 | - | 90 | - | 20 | - |
| 0 | 4.375 | 90 | - | 0 | - | 10 | - | 0 | - | 0 | - | 0 | - | 0 | - | 80 | - |
| 0 | 8.75 | 93 | - | 10 | - | 50 | - | 0 | - | 0 | - | 10 | - | 10 | - | 85 | - |
| 0 | 17.5 | 95 | - | 20 | - | 65 | - | 0 | - | 0 | - | 20 | - | 20 | - | 85 | - |
| 1.25 | 4.375 | 97 | 90 | 75 | 70 | 40 | 19 | 50 | 30 | 0 | 0 | 50 | 0 | 50* | 50 | 95 | 82 |
| 1.25 | 8.75 | 95 | 93 | 80 | 73 | 65 | 55 | 50 | 30 | 10 | 0 | 60 | 10 | 50* | 55 | 93 | 87 |
| 1.25 | 17.5 | 98 | 95 | 85 | 76 | 70 | 69 | 50 | 30 | 10 | 0 | 85 | 20 | 60* | 60 | 95 | 87 |
| 2.5 | 4.375 | 93 | 91 | 80* | 80 | 70 | 19 | 40 | 20 | 0 | 0 | 60 | 0 | 80 | 60 | 97 | 84 |
| 2.5 | 8.75 | 95 | 93 | 85 | 82 | 75 | 55 | 40 | 20 | 10 | 0 | 50 | 10 | 90 | 64 | 97 | 88 |
| 2.5 | 17.5 | 97 | 95 | 87 | 84* | 85 | 69 | 45 | 20 | 20 | 0 | 65 | 20 | 95 | 68 | 97 | 88 |
| 5 | 4.375 | 87* | 92 | 95 | 93 | 60 | 37 | 60 | 40 | 20* | 30 | 65 | 0 | 85* | 90 | 90 | 84 |
| 5 | 8.75 | 95 | 94 | 90* | 94 | 70 | 65 | 75 | 40 | 20* | 30 | 70 | 10 | 80* | 91 | 95 | 88 |
| 5 | 17.5 | 97 | 96 | 90* | 94 | 75* | 76 | 75 | 40 | 30* | 30 | 75 | 20 | 85* | 92 | 95 | 88 |

*** no synergism observed; not according to the present invention**

**Table 2: Synergistic combination of Cmpd 1 and diclosulam.**

| Application Rate | | BRSNW | | CHEAL | | VIOTR | | STEME | | SETFA | | SORVU | | AMARE | | CYPES | | IPOHE | |
|---|---|---|---|---|---|---|---|---|---|---|---|---|---|---|---|---|---|---|---|
| Cmpd 1 (g ae/ha) | Diclosulam (g ai/ha) | Obs | Exp | Obs | Exp | Obs | Exp | Obs | Exp | Obs | Exp | Obs | Exp | Obs | Exp | Obs | Exp | Obs | Exp |
| 1.25 | 0 | 0 | - | 70 | - | 10 | - | 30 | - | 0 | - | 0 | - | 50 | - | 50 | - | 10 | - |
| 2.5 | 0 | 5 | - | 80 | - | 10 | - | 20 | - | 0 | - | 0 | - | 60 | - | 90 | - | 20 | - |
| 5 | 0 | 20 | - | 93 | - | 30 | - | 40 | - | 30 | - | 0 | - | 90 | - | 93 | - | 20 | - |
| 0 | 4.375 | 80 | - | 0 | - | 10 | - | 0 | - | 0 | - | 0 | - | 10 | - | 60 | - | 75 | - |
| 0 | 8.75 | 85 | - | 10 | - | 50 | - | 0 | - | 0 | - | 0 | - | 20 | - | 60 | - | 80 | - |
| 0 | 17.5 | 90 | - | 40 | - | 70 | - | 0 | - | 0 | - | 0 | - | 30 | - | 70 | - | 85 | - |
| 1.25 | 4.375 | 95 | 80 | 85 | 70 | 20 | 19* | 20 | 30 | 0* | 0 | 10 | 0 | 85 | 55 | 97 | 80 | 97 | 78 |
| 1.25 | 8.75 | 97 | 85 | 87 | 73 | 60 | 55 | 40 | 30 | 20 | 0 | 20 | 0 | 80 | 60 | 95 | 80 | 100 | 82 |
| 1.25 | 17.5 | 97 | 90 | 90 | 82* | 85 | 73 | 50 | 30 | 20 | 0 | 30 | 0 | 100 | 65 | 97 | 85 | 100 | 87 |
| 2.5 | 4.375 | 93 | 81 | 80* | 80 | 70 | 19* | 40 | 20* | 20 | 0 | 30 | 0 | 70 | 64 | 97 | 96 | 97 | 80 |
| 2.5 | 8.75 | 93 | 86 | 83 | 82 | 70 | 55 | 50 | 20* | 20 | 0 | 60 | 0 | 70 | 68 | 90* | 96 | 95 | 84 |
| 2.5 | 17.5 | 95 | 91 | 87* | 88 | 85 | 73 | 50 | 20* | 30 | 0 | 65 | 0 | 85 | 72 | 95* | 97 | 97 | 88 |
| 5 | 4.375 | 93 | 84 | 95 | 93 | 50 | 37* | 70 | 40 | 10* | 30 | 10 | 0 | 80* | 91 | 90* | 97 | 97 | 80 |
| 5 | 8.75 | 95 | 88 | 90* | 94 | 80 | 65* | 70 | 40 | 30* | 30 | 10 | 0 | 93 | 92 | 95* | 97 | 93 | 84 |
| 5 | 17.5 | 97 | 92 | 90* | 96 | 90 | 79 | 75 | 40 | 30* | 30 | 20 | 0 | 95 | 93 | 93* | 98 | 95 | 88 |

*** no synergism observed; not according to the present invention**

## Claims

1. A herbicidal composition comprising a herbicidally effective amount of (a) a compound of the formula (I)

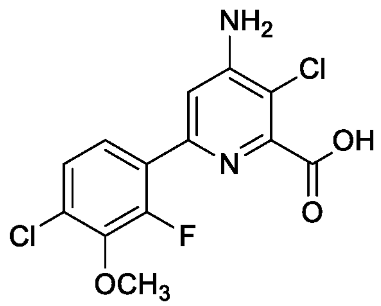

(I)

or an agriculturally acceptable salt or ester thereof and (b) diclosulam or cloransulam-methyl or an agriculturally acceptable salt thereof, wherein the combination of (a) and (b) exhibits synergism.

2. The composition of claim 1, wherein no additional herbicidal active ingredients are present in the composition.

3. The composition of claim 1 or 2, wherein (a) is a $C_1$-$C_4$ alkyl or benzyl ester of compound (I), preferably (a) is a methyl ester, or potassium salt of compound (I), or the carboxylic acid of formula (I), more preferably wherein (a) is the methyl ester of the compound of formula (I) and (b) is cloransulam-methyl or diclosulam, even more preferably wherein (b) is cloransulam-methyl or an agriculturally acceptable salt thereof or diclosulam or an agriculturally acceptable salt thereof and the weight ratio of (a) to (b) is from 1:35 to 5:1, preferably from 1:20 to 1.25:1.

4. The composition of any of claims 1-3, further comprising a herbicide safener and/or an agriculturally acceptable adjuvant or carrier.

5. A method of controlling undesirable vegetation which comprises applying a herbicidally effective amount of a herbicidal composition comprising:

(a) a compound of the formula (I)

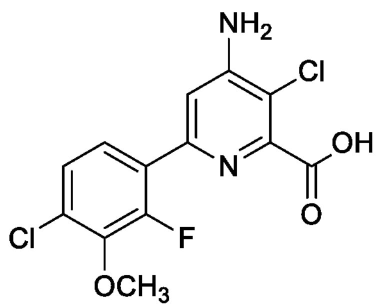

(I)

or an agriculturally acceptable salt or ester thereof and
(b) diclosulam or cloransulam-methyl or an agriculturally acceptable salt thereof, wherein the combination of (a) and (b) exhibits synergism.

6. The method of claim 5, wherein no additional herbicidal active ingredients are present in the composition.

7. The method of claim 5 or 6 wherein the undesirable vegetation is controlled in winter/spring oilseed rape, winter/spring canola, vegetables, *Brassica* spp, ornamentals, rice, wheat, triticale, barley, oats, rye, sorghum, corn/maize, sunflower, row crops, pastures, grasslands, rangelands, fallowland, sugarcane, turf, tree and vine orchards, aquatics,

and industrial vegetation management and rights-of-way.

**8.** The method of any of claims 5-7, wherein the undesirable vegetation is immature.

**9.** The method of any of claims 5-7, wherein the (a) and (b) are applied pre-emergently or post-emergently.

**10.** The method of claim 5 or 6 wherein the undesirable vegetation is controlled in a crop that is tolerant to glyphosate, glufosinate, dicamba, phenoxy auxins, pyridyloxy auxins, aryloxyphenoxypropionates, acetyl CoA carboxylase (ACCase) inhibitors, imidazolinones, acetolactate synthase (ALS) inhibitors, 4-hydroxyphenyl-pyruvate dioxygenase (HPPD) inhibitors, protoporphyrinogen oxidase (PPO) inhibitors, triazines, or bromoxynil, wherein the tolerant crop preferably possesses multiple or stacked traits conferring tolerance to multiple herbicides or multiple modes-of-action.

**11.** The method of any of claims 5-10, wherein (a) is the methyl ester of the compound of formula (I), (b) is diclosulam or cloransulam-methyl, and the (a) and (b) are applied in a weight ratio of (a) to (b) of from 1:35 to 5:1, preferably from 1:20 to 1.25:1.

**12.** The method of claim 10, wherein the undesirable vegetation comprises a herbicide resistant or tolerant weed, which preferably is a biotype with resistance or tolerance to multiple herbicides, multiple chemical classes, or multiple herbicide modes-of-action or is a biotype resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action, quinclorac, arylaminopropionic acids, difenzoquat, endothall, or organoarsenicals.

**13.** The method of any one of claims 5-12, wherein the undesirable vegetation is *Viola tricolor* (L.) (VIOTR), *Stellaria media* (L.) Vill. (STEME), *Sorghum vulgare* (SORVU), or *Ipomoea hederacea* (L.) Jacq. (IPOHE).

**14.** The method of claim 5 which comprises applying the composition of any of claims 1-4.

**Patentansprüche**

**1.** Eine herbizide Zusammensetzung umfassend eine herbizid wirksame Menge von (a) einer Verbindung der Formel (I)

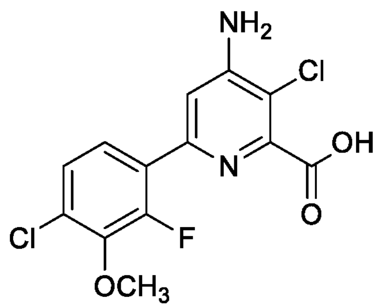

(I)

oder einem landwirtschaftlich akzeptablen Salz oder Ester davon und (b) Diclosulam oder Cloransulam-Methyl oder einem landwirtschaftlich akzeptablen Salz davon, wobei die Kombination von (a) und (b) Synergismus zeigt.

**2.** Die Zusammensetzung gemäß Anspruch 1, wobei keine zusätzlichen herbiziden Wirkstoffe in der Zusammensetzung vorhanden sind.

**3.** Die Zusammensetzung gemäß Anspruch 1 oder 2, wobei (a) ein $C_1$-$C_4$-Alkyl- oder Benzylester der Verbindung (I) ist, vorzugsweise (a) ein Methylester oder Kaliumsalz der Verbindung (I) oder die Carbonsäure der Formel (I) ist, bevorzugter wobei (a) der Methylester der Verbindung der Formel (I) ist und (b) Cloransulam-Methyl oder Diclosulam

ist, noch bevorzugter wobei (b) Cloransulam-Methyl oder ein landwirtschaftlich akzeptables Salz davon oder Diclosulam oder ein landwirtschaftlich akzeptables Salz davon ist und das Gewichtsverhältnis von (a) zu (b) von 1:35 bis 5:1, vorzugsweise von 1:20 bis 1,25:1 beträgt.

**4.** Die Zusammensetzung gemäß einem der Ansprüche 1-3, des Weiteren umfassend einen Herbizid-Safener und/oder einen landwirtschaftlich akzeptablen Hilfs- oder Trägerstoff.

**5.** Ein Verfahren zur Bekämpfung unerwünschter Vegetation, welches das Anwenden einer herbizid wirksamen Menge einer herbiziden Zusammensetzung umfassend:

(a) eine Verbindung der Formel (I)

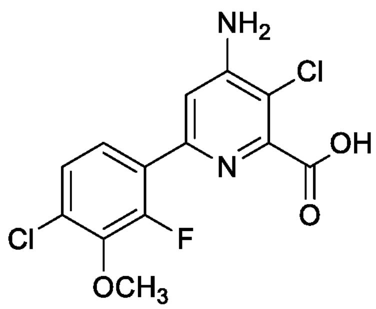

(I)

oder ein landwirtschaftlich akzeptables Salz oder einen entsprechenden Ester davon und
(b) Diclosulam oder Cloransulam-Methyl oder ein landwirtschaftlich akzeptables Salz davon

umfasst, wobei die Kombination von (a) und (b) Synergismus zeigt.

**6.** Das Verfahren gemäß Anspruch 5, wobei keine zusätzlichen herbiziden Wirkstoffe in der Zusammensetzung vorhanden sind.

**7.** Das Verfahren gemäß Anspruch 5 oder 6, wobei die unerwünschte Vegetation in Winter-/Sommerölsamenraps, Winter-/Sommercanola, Gemüsen, *Brassica* spp, Zierpflanzen, Reis, Weizen, Triticale, Gerste, Hafer, Roggen, Sorghumhirse, Mais/Welschkorn, Sonnenblume, Reihenkulturen, Wiesen, Grasland, Weiden, Brachland, Zuckerrohr, Rasen, Baumschulen und Weingärten, in wässriger Umgebung und im industriellen Vegetationsmanagement und entlang von Verkehrswegen bekämpft wird.

**8.** Das Verfahren gemäß einem der Ansprüche 5-7, wobei die unerwünschte Vegetation unreif ist.

**9.** Das Verfahren gemäß einem der Ansprüche 5-7, wobei (a) und (b) im Vorauflauf oder Nachauflauf angewandt werden.

**10.** Das Verfahren gemäß Anspruch 5 oder 6, wobei die unerwünschte Vegetation in einer Nutzpflanze bekämpft wird, die tolerant gegenüber Glyphosat, Glufosinat, Dicamba, Phenoxyauxinen, Pyridyloxyauxinen, Aryloxyphenoxypropionsäureestern, Acetyl-Co-Carboxylase-(ACCase)-Hemmern, Imidazolinonen, Acetolactatsynthase-(ALS)-Hemmern, 4-Hydroxyphenylpyruvat-Dioxygenase-(HPPD)-Hemmern, Protoporphyrinogenoxidase-(PPO)-Hemmern, Triazinen oder Bromoxynil tolerant ist, wobei die tolerante Nutzpflanze vorzugsweise mehrere oder gestapelte Merkmale, die Toleranz gegenüber mehreren Herbiziden oder mehreren Wirkweisen verleihen, besitzt.

**11.** Das Verfahren gemäß einem der Ansprüche 5-10, wobei (a) der Methylester der Verbindung der Formel (I) ist, (b) Diclosulam oder Cloransulam-Methyl ist und (a) und (b) in einem Gewichtsverhältnis von (a) zu (b) von 1:35 bis 5:1, vorzugsweise von 1:20 bis 1,25:1 angewandt werden.

**12.** Das Verfahren gemäß Anspruch 10, wobei die unerwünschte Vegetation ein herbizidresistentes oder -tolerantes Unkraut umfasst, welches vorzugsweise ein Biotyp mit Resistenz oder Toleranz gegenüber mehreren Herbiziden, mehreren chemischen Klassen oder mehreren herbiziden Wirkweisen ist oder ein Biotyp ist, der resistent oder

tolerant gegenüber Acetolactatsynthase-(ALS)-Hemmern, Photosystem-II-Hemmern, Acetyl-CoA-Carboxylase-(ACCase)-Hemmern, synthetischen Auxinen, Photosystem-I-Hemmern, 5-Enolpyruvylshikimat-3-phosphat-(EPSP)-Synthase-Hemmern, Mikrotubuli-Anordnung-Hemmern, Hemmern der Lipidsynthese, Protoporphyrinogen-Oxidase-(PPO)-Hemmern, Hemmern der Carotinoid-Biosynthese, Hemmern der Synthese sehr langkettiger Fettsäuren (VLCFA), Phytoendesaturase-(PDS)-Hemmern, Glutamin-Synthetase-Hemmern, 4-Hydroxyphenylpyruvatdioxygenase-(HPPD)-Hemmern, Mitosehemmern, Hemmern der Cellulosebiosynthese, Herbiziden mit mehreren Wirkungsweisen, Chinclorac, Arylaminopropionsäuren, Difenzoquat, Endotall oder Organoarsenverbindungen ist.

**13.** Das Verfahren gemäß einem der Ansprüche 5-12, wobei die unerwünschte Vegetation *Viola tricolor* (L.) (VIOTR), *Stellaria media* (L.) Vill. (STEME), *Sorghum vulgare* (SORVU) oder *Ipomoea hederacea* (L.) Jacq. (IPOHE) ist.

**14.** Das Verfahren gemäß Anspruch 5, welches das Anwenden der Zusammensetzung gemäß einem der Ansprüche 1-4 umfasst.

## Revendications

**1.** Composition herbicide comprenant une quantité à effet herbicide de (a) un composé de formule (I)

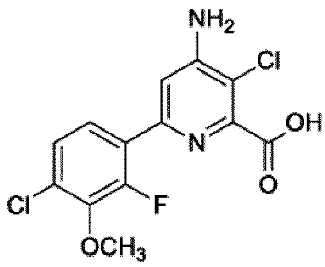

(I)

ou un sel ou ester acceptable en agriculture de ce composé et (b) du diclosulame ou du cloransulame-méthyle ou un sel acceptable en agriculture d'un tel composé, l'association de (a) et (b) présentant une synergie.

**2.** Composition selon la revendication 1, où aucun composant actif herbicide supplémentaire n'est présent dans la composition.

**3.** Composition selon la revendication 1 ou 2, dans laquelle (a) est un ester d'alkyle en $C_1$-$C_4$ ou de benzyle du composé (I), de préférence (a) est un ester de méthyle, ou le sel de potassium du composé (I), ou l'acide carboxylique de formule (I), de façon plus particulièrement préférée dans laquelle (a) est l'ester de méthyle du composé de formule (I) et (b) est le cloransulame-méthyle ou le diclosulame, de façon encore plus particulièrement préférée dans laquelle (b) est le cloransulame-méthyle ou un sel acceptable en agriculture de ce composé ou le diclosulame ou un sel acceptable en agriculture de ce composé et le rapport pondéral de (a) à (b) vaut de 1:35 à 5:1, de préférence de 1:20 à 1,25:1.

**4.** Composition selon l'une quelconque des revendications 1 à 3, comprenant encore un phytoprotecteur contre les herbicides et/ou un adjuvant ou une substance de support acceptables en agriculture.

**5.** Procédé de lutte contre une végétation indésirable, qui comprend le fait d'appliquer une quantité à effet herbicide d'une composition herbicide comprenant :

a) un composé de formule (I)

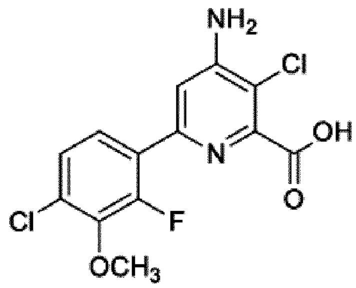

(I)

ou un sel ou ester acceptable en agriculture de ce composé et
(b) du diclosulame ou du cloransulame-méthyle ou un sel acceptable en agriculture d'un tel composé, l'association de (a) et (b) présentant une synergie.

**6.** Procédé selon la revendication 5, dans lequel aucun composant actif herbicide supplémentaire n'est présent dans la composition.

**7.** Procédé selon la revendication 5 ou 6, dans lequel on lutte contre la végétation indésirable dans des cultures de colza oléagineux d'hiver/de printemps, colza canola d'hiver/de printemps, légumes, *Brassica* spp., plantes ornementales, riz, blé, triticale, orge, avoine, seigle, sorgho, maïs, tournesol, des cultures en ligne, pâturages, herbages, prairies, jachères, des cultures de canne à sucre, du gazon, des vergers et vignobles, des plans d'eau, et des zones d'aménagement végétal intégré et des voies de passage.

**8.** Procédé selon l'une quelconque des revendication 5 à 7, dans lequel la végétation indésirable est immature.

**9.** Procédé selon l'une quelconque des revendication 5 à 7, dans lequel on applique les composés (a) et (b) en prélevée ou en post-levée.

**10.** Procédé selon la revendication 5 ou 6, dans lequel on lutte contre la végétation indésirable dans une culture de plante qui est tolérante au glyphosate, au glufosinate, au dicamba, aux auxines de type phénoxy, aux auxines de type pyridyloxy, aux aryloxyphénoxypropionates, aux inhibiteurs de l'acétyl CoA carboxylase (ACCase), aux imidazolinones, aux inhibiteurs de l'acétolactate synthase (ALS), aux inhibiteurs de la 4-hydroxyphényl-pyruvate dioxygénase (HPPD), aux inhibiteurs de la protoporphyrinogène oxydase (PPO), aux triazines, ou au bromoxynil, la plante cultivée tolérante possédant de préférence des caractères multiples ou empilés conférant une tolérance à de multiples herbicides ou de multiples modes d'action.

**11.** Procédé selon l'une quelconque des revendication 5 à 10, dans lequel (a) est l'ester de méthyle du composé de formule (I), (b) est le diclosulame ou le cloransulame-méthyle, et on applique les composés (a) et (b) en un rapport pondéral de (a) à (b) valant de 1:35 à 5:1, de préférence de 1:20 à 1,25:1.

**12.** Procédé selon la revendication 10, dans lequel la végétation indésirable comprend une adventice tolérante ou résistante à des herbicides, qui de préférence est un biotype à résistance ou tolérance à de multiples herbicides, de multiples classes chimiques, ou de multiples modes d'action d'herbicides ou est un biotype résistant ou tolérant aux inhibiteurs de l'acétolactate synthase (ALS), aux inhibiteurs du photosystème II, aux inhibiteurs de l'acétyl CoA carboxylase (ACCase), aux auxines synthétiques, aux inhibiteurs du photosystème I, aux inhibiteurs de la 5-énolpyruvylshikimate-3-phosphate (EPSP) synthase, aux inhibiteurs de l'assemblage des microtubules, aux inhibiteurs de la synthèse des lipides, aux inhibiteurs de la protoporphyrinogène oxydase (PPO), aux inhibiteurs de la biosynthèse des caroténoïdes, aux inhibiteurs d'acides gras à très longue chaîne (AGTLC), aux inhibiteurs de la phytoène désaturase (PDS), aux inhibiteurs de la glutamine synthétase, aux inhibiteurs de la 4-hydroxyphényl-pyruvate dioxygénase (HPPD), aux inhibiteurs de la mitose, aux inhibiteurs de la biosynthèse de la cellulose, à des herbicides à multiples modes d'action, au quinclorac, aux acides arylaminopropioniques, au difenzoquat, à l'endothall, ou aux organoarsénieux.

**13.** Procédé selon l'une quelconque des revendications 5 à 12, dans lequel la végétation indésirable est *Viola tricolor* (L.) (VIOTR), *Stellaria média* (L.) Vill. (STEME), *Sorghum vulgare* (SORVU), ou *Ipomoea hederacea* (L.) Jacq. (IPOHE).

**14.** Procédé selon la revendication 5, qui comprend le fait d'appliquer la composition selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009029518 A
- US 7314849 B2


### Non-patent literature cited in the description


- The Pesticide Manual: A World Compendium. The Pesticide Manual. BCPC, 2009
- Herbicide Handbook. Weed Science Society of America, 2007
- **COLBY, S.R.** Calculation of the synergistic and antagonistic response of herbicide combinations. *Weeds,* 1967, vol. 15, 20-22
- McCutcheon's Detergents and Emulsifiers Annual. MC Publishing Corp, 1998
- Encyclopedia of Surfactants. Chemical Publishing Co, 1980, vol. I-III, 81
- **COLBY, S. R.** Calculation of the synergistic and antagonistic response of herbicide combinations. *Weeds,* 1967, vol. 15, 20-22